# EUROPÄISCHE PATENTANMELDUNG

(11) **EP 2 511 539 A1**
(43) Veröffentlichungstag der Anmeldung: **17.10.2012**
(21) Anmeldenummer: 11405243.4
(22) Anmeldetag: 11.04.2011
(51) Int. Cl.: F16B 5/02, F16B 19/02

(54) **Schraubverbindung**

(71) Anmelder: Amec System GmbH, 3368 Bleienbach (CH)
(72) Erfinder: Chalverat Raymond Olivier, 5736 Burg (CH)
(74) Vertreter: Rüfenacht, Philipp Michael

(57) **Zusammenfassung**

Eine Schraubverbindung (1000), insbesondere für den Maschinen-, Sondermaschinen- und Anlagenbau, umfasst ein erstes Element (1100) mit einem Aussengewinde und einem ersten Kopfteil, sowie ein zweites Element (1200; 1300), mit einem Innengewinde (1211; 1311) und einen zweiten Kopfteil (1220; 1320). Bei in das zweite Element (1200; 1300) vollständig eingeschraubtem ersten Element (1100) ist eine Oberfläche zwischen dem ersten Kopfteil (1120) und dem zweiten Kopfteil (1220; 1320) als glatter Kreiszylinder (1210; 1310) ausgebildet, welcher insbesondere zur Verstiftung geeignet ist. Damit wird eine besonders einfache Schraubverbindung geschaffen, welche gleichzeitig zur Verstiftung dient und variabel einsetzbar ist.

## Beschreibung

### Technisches Gebiet

Die Erfindung betrifft eine Schraubverbindung mit einem ersten Element, umfassend ein Aussengewinde und einen ersten Kopfteil, sowie einem zweiten Element, umfassend ein Innengewinde und einen zweiten Kopfteil.

### Stand der Technik

Verschraubungssysteme, umfassend einen ersten Teil mit einem Innengewinde und einen zweiten Teil mit einem Aussengewinde sind in einer Vielzahl von Varianten bekannt. Dazu gehören nicht nur die normale Schraubverbindung mittels einer Schraube und einer Mutter.

Die US 2,152,189 A (A. Henderson) betrifft zum Beispiel eine Stahlkonstruktion aus einfachen und leichten strukturellen Elementen für den Gerüstbau von Häusern. Die Verbindung der Elemente erfolgt mittels einer Schraube, welche zur hälfte mit einem Gewinde versehen ist. Die Mutter ist ebenfalls nur bis zur Hälfte mit einem Gewinde versehen. Damit können eine unterschiedliche Anzahl Lagen an Elementen verschraubt werden.

Bei herkömmlichen Verschraubungssystemen besteht die Gefahr, dass durch das Gewindeteil eine radiale Fixierung von zu verbindenden Elementen nicht gewährleistet werden kann. Die durch die US 2,152,189 A offenbarte Schraubverbindung ist bezüglich axialen Kräften, welche auf die zu verbindenden Elemente wirken, nicht stabil und benötigt viel Platz, was sowohl sterisch, wie auch ästhetisch nicht befriedigend ist.

### Darstellung der Erfindung

Aufgabe der Erfindung ist es, eine dem eingangs genannten technischen Gebiet zugehörende Schraubverbindung zu schaffen, welche eine präzise und stabile Verbindung erlaubt und variabel einsetzbar ist und insbesondere für den Maschinen-, Sondermaschinen- und Anlagenbau geeignet ist.

Die Lösung der Aufgabe ist durch die Merkmale des Anspruchs 1 definiert. Gemäss der Erfindung ist, bei in das zweite Element vollständig eingeschraubtem ersten Element, eine Oberfläche zwischen dem ersten Kopfteil und dem zweiten Kopfteil als glatter Kreiszylinder ausgebildet, welcher insbesondere zur Verstiftung geeignet ist.

Damit wird eine Schraubverbindung geschaffen, welche sowohl axiale Kräfte durch die Verschraubung, wie auch radiale Kräfte durch die Verstiftung, das heisst, über den als glatter Kreiszylinder ausgebildeten Bereich, aufnehmen kann. Die Stiftwirkung bedingt allerdings, dass die Aufnahmen der zu verschraubenden Bauteile einen zum Kreiszylinder entsprechenden Durchmesser aufweisen. Dies ist insbesondere bei Konstruktionen von Vorteil, welche eine hohe Präzision fordern. Gegenüber den herkömmlichen Verschraubungen besteht der Vorteil, dass der Gewindeteil nicht in Kontakt mit den zu verschraubenden Elementen steht, womit die Gefahr einer Verletzung des Gewindeteils im Kontaktbereich mit den zu verschraubenden Elementen verringert werden kann. Weiter kann dadurch die Verschraubung als solche kompakter ausgebildet sein. Der Gewindeteil des ersten Elements und des zweiten Elements kann damit eine grössere axiale Länge aufweisen, womit radiale und insbesondere auch axiale Kräfte besser aufgenommen werden können. Bei der Verwendung kann bereits nach dem Einführen des zweiten Elements mit dem Innengewinde in die Aufnahmen der zu verbindenden Bauteile eine Verstiftung erreicht werden, insbesondere bevor das erste Element eingeschraubt ist. Damit wird der Aufbau einer Anlage vereinfacht, da durch die verstiftende Wirkung des zweiten Elements bereits vor der Verschraubung die radialen Kräfte aufgenommen werden können und damit die radiale Position, insbesondere die radiale Präzision bereits gegeben ist. Vorzugsweise ist das Innengewinde des zweiten Elements koaxial zum und innerhalb des glatten Kreiszylinders angeordnet.

Ein mögliches Anwendungsgebiet ist der Maschinen-, Sondermaschinen- und Anlagenbau, bei welchem Maschinenelemente über ein solides Gefüge verknüpft werden. Diese Gefüge stellen häufig hohe Anforderungen an die Präzision, insbesondere wenn zwei Maschinen über ein solches Gefüge verbunden werden, welche mechanisch interagieren und so Kräfte auf das Gefüge ausüben, so zum Beispiel Schwingungen. Die erfindungsgemässe Schraubverbindung ist allerdings nicht auf den Anlagenbau eingeschränkt, sondern kann in allen Bereichen eingesetzt werden, wo eine präzise Verschraubung von Vorteil sein kann. Als nicht abschliessende Aufzählung sei hier der Fahrzeugbau, Gefügebau, Maschinenbau, Sondermaschinenbau, Apparatebau etc. erwähnt.

Im Folgenden wird der Begriff axial jeweils für eine Achse verwendet, welche koaxial mit der Achse eines Gewindeteils, insbesondere eines Innen- oder Aussengewindes verläuft. Der Begriff radial ist jeweils als rechtwinklig zur Achse zu verstehen.

Vorzugsweise ist das erste Element mit dem zweiten Element in axial mindestens zwei Positionen verschraubbar, wobei der Abstand zwischen dem ersten und dem zweiten Kopfteil in der ersten axialen Position grösser ist als in der zweiten axialen Position. Damit können in der ersten Position zum Beispiel drei Bauteile derselben Dicken und in der zweiten axialen Position zwei solche Bauteile verschraubt werden. In der ersten axialen Position können auch mehr als drei und in der zweiten axialen Position mehr als zwei Bauteile verschraubt werden. Insbesondere kann die Verschraubung auch in mehr als zwei axialen Positionen erfolgen, typischerweise kann der Abstand zwischen den Kopfteilen stetig zwischen dem maximalen und dem minimalen Abstand variiert werden. Besonders in der ersten axialen Position muss die Oberfläche zwischen dem ersten und dem zweiten Kopfteil nicht zwingend vollständig als glatter Kreiszylinder ausgebildet sein. Bereichsweise kann auch das Aussengewinde oder ein sich an das Aussengewinde anschliessender Teil, welcher zwischen dem Kopfteil und dem Gewindeteil liegt, des ersten Elements noch aus dem glatten Kreiszylinder hervorragen und in diesem Bereich einen geringeren Durchmesser aufweisen als der Kreiszylinder. In diesem Bereich ist das Bauteil radial nicht gestützt. Dies ist insbesondere dann unproblematisch, wenn das in diesen Bereich zu liegen kommende Bauteil zumindest teilweise durch den glatten Kreiszylinder radial gehalten ist. Vorzugsweise weist dieser Bereich bezüglich des Bauteils eine axiale Länge von höchstens ungefähr einem Drittel der axialen Länge der Aufnahme des Bauteils auf, so dass das Bauteil dennoch hinreichend radial gehalten und die Verstiftung gewährleistet ist.

Das Aussengewinde des ersten Elements und das Innengewinde des zweiten Elements sind vorzugsweise nicht konisch ausgebildet, um die beiden axialen Positionen ermöglichen zu können.

Bevorzugt ist der Abstand in der ersten axialen Position um mindestens 100/n Prozent grösser als in der zweiten axialen Position, wobei n gleich drei oder vier ist. Anders ausgedrückt ist der Abstand in der ersten axialen Position vorzugsweise um mindestens 25 %, insbesondere um mindestens 33 % grösser als in der zweiten axialen Position.

Im Falle, dass n gleich drei ist können in der ersten axialen Position drei Bauteile gehalten werden, welche eine Dicke aufweisen, die der Hälfte des Abstandes in der zweiten axialen Position entspricht. Demzufolge können in der zweiten axialen Position genau zwei solche Bauteile gehalten werden.

Im Falle, dass n gleich vier ist können in der ersten axialen Position fünf Bauteile gehalten werden, welche eine Dicke aufweisen, die einem Viertel des Abstandes in der zweiten axialen Position entspricht. Demzufolge können in der zweiten axialen Position genau vier solche Bauteile gehalten werden.

Der Grundgedanke liegt nun darin, dass das zweite Element in zwei Ausführungsformen vorliegen kann, um Bauteile der Dicke d zu verschrauben. Bei der ersten Ausführungsform beträgt der axiale Abstand in der zweiten Position 2d beträgt und der zweite axiale Abstand der zweiten Ausführungsform 4d. Damit wird erreicht, dass mit der ersten Ausführungsform entweder zwei oder drei Bauteile und mit der zweiten Ausführungsform vier oder fünf Bauteile verschraubt werden können. In der Verwendung kann ein Bauteil auch lediglich als Distanzhülse ausgebildet sein, um eine Verbindung mit einem axial versetzten weiteren Bauteil zu schaffen.

Dem Fachmann ist klar, dass dasselbe Prinzip auch für n gleich fünf etc. angewandt werden kann, womit beispielsweise bei n gleich fünf in der ersten axialen Position sechs und in der zweiten axialen Position fünf Bauteile gehalten werden können. Das Grundprinzip ist als generisch zu verstehen.

In einer bevorzugten Ausführungsform sind in einer ersten axialen Verschraubungsposition drei, respektive fünf Lagen, insbesondere Lagen, die alle dieselbe Dicke aufweisen, zwischen dem ersten und dem zweiten Kopfteil aufgenommen und in einer zweiten axialen Verschraubungsposition zwei, respektive vier Lagen zwischen dem ersten und dem zweiten Kopfteil aufgenommen, wobei jeweils alle Lagen radial über den glatten Kreiszylinder gehalten sind.

Vorzugsweise ist das erste Element als Hutschraube ausgebildet. Der Kopfteil des ersten Elements ist damit als Hut der Hutschraube ausgebildet. Damit können die in die entsprechende axiale Richtung ausgeübten Kräfte über den Hut der Hutschraube aufgenommen werden. Der Hut weist einen Kontaktbereich für ein Drehmomentwerkzeug auf, so dass über den Hut der Hutschraube die Schraubverbindung angezogen werden kann (siehe weiter unten).

In Varianten kann die das erste Element auch anderweitig ausgebildet sein, wobei vorzugsweise der Kopfteil einen radial grösseren Querschnitt aufweist als der Gewindeteil.

Vorzugsweise umfasst der Aussengewindeteil eine zum ersten Kopfteil benachbarte umlaufende Nut. Damit kann in der zweiten axialen Position ein Teil des glatten Kreiszylinders in der Nut aufgenommen werden. Weiter wird dadurch ermöglicht, dass in beiden axialen Positionen die Bauteile ohne zusätzliche Elemente zwischen den Kopfteilen axial gehalten werden können, während die Verstiftung gewährleistet bleibt. Die Nut weist dazu einen Aussendurchmesser auf, welcher im Wesentlichen, insbesondere in Abhängigkeit der zulässigen Längentoleranz der Durchmesser, dem Aussendurchmesser des glatten Kreiszylinders entspricht. Der Innendurchmesser entspricht in etwa dem Aussendurchmesser des Aussengewindes des ersten Elements. Damit wird gewährleistet, dass das Innengewinde in die Nut hineingeschraubt werden kann.

Die Nut weist in einem Querschnitt eine U-Form auf, wobei die Öffnung in axialer Richtung, insbesondere in Richtung des Gewindes orientiert ist.

In Varianten kann auch auf die umlaufende Nut verzichtet werden. In diesem Fall könnten Unterlegscheiben oder Distanzhülsen die axiale Fixierung der Bauteile gewährleisten.

Bevorzugt weist die Nut eine axiale Tiefe bezüglich dem Abstand zwischen dem ersten und dem zweiten Kopfteil, in vollständig eingeschraubtem Zustand, im Bereich von unter 50% oder unter 25% des Abstandes, auf. Die Tiefe der Nut beträgt bei der ersten Ausführungsform weniger als 50% und bei der zweiten Ausführungsform weniger als 25% des Abstandes zwischen den Kopfteilen bei vollständig eingeschraubtem Zustand. Da es für die radiale Stützung nicht notwendig ist, dass das Bauteil vollständig seitlich durch den glatten Kreiszylinder gehalten ist, reicht es aus, wenn die Nut eine Tiefe von weniger als 50%, respektive weniger als 25% des oben erwähnten Abstandes aufweist. Mit der axialen Tiefe der Nut kann ein Kompromiss zwischen axialer Ausdehnung der Verschraubung und mit der radialen Stützung des an den ersten Kopfteil anliegenden Bauteils eingegangen werden. Es kann je nach Materialwahl und Einsatzgebiet ausreichend sein, wenn die Tiefe der Nut ungefähr 2/3 der Bauteildicke aufweist, womit das in verschraubtem Zustand den ersten Kopfteil kontaktierende Bauteil in der ersten axialen Position den glatten Kreiszylinder mit zwei Dritteln einer Innenfläche der Aufnahme kontaktiert.

Prinzipiell kann die Nut auch eine grössere axiale Tiefe aufweisen. Damit könnte ein Abstand zwischen den beiden Kopfteilen in einem grösseren Bereich variiert werden, wobei aber die axiale Gesamtlänge des Kopfteils des ersten Elements grösser sein würde.

Die Hülsenmuttern können auch so ausgebildet sein, dass ein Abstand der beiden Kopfteile in der zweiten axialen Position bei einer ersten Ausführung im Wesentlichen null ist, in einer zweiten Ausführung der axialen Tiefe der Nut entspricht und in einer dritten Ausführung der doppelten axialen Tiefe der Nut entspricht etc. Damit wird ein Verschraubungssystem geschaffen, welches unabhängig der Dicke der zu verschraubenden Bauteile eingesetzt werden kann, insbesondere für jede zu verschraubende Dicke geeignet ist.

Der Aussengewindeteil weist bevorzugt im Bereich der Nut eine Verjüngung auf. Das Aussengewinde des ersten Elements muss nicht bis in die Nut hineinragen, sondern kann vor dem Kopfteil in einen in einen glatten Bereich übergehen, welcher aber einen Durchmesser aufweist, welcher dem Durchmesser des Aussengewindes des ersten Elements, abzüglich der doppelten Gewindetiefe entspricht, respektive geringfügig geringer ist. Dies kann die Herstellung der Hutschraube vereinfachen. Das erste Element und das zweite Element sind von Vorteil so ausgebildet, dass in jeder axialen Position, in welche Bauteile gehalten sind, das Aussengewinde vollständig im Innengewinde des zweiten Elements liegt.

Alternativ kann das Gewinde auch bis in die Nut hinein ragen.

Vorzugsweise umfasst der Kopfteil des ersten Elements einen Sechskantkopf. Damit wird erreicht, dass mittels eines herkömmlichen Drehmomentschlüssels vergleichsweise hohe Drehmomente auf das erste Element ausgeübt werden können, womit die Verschraubung an Stabilität gewinnt.

In Varianten können Aussenvierkantköpfe, Innensechskantköpfe, Torx oder weitere dem Fachmann bekannte Schraubenköpfe eingesetzt werden. Bevorzugt sind allerdings Schraubenköpfe, auf welche ein grosses Drehmoment ausgeübt werden kann.

Vorzugsweise weist der Kopfteil des ersten Elements in einer dem Gewindeteil zugewandten Seite eine Querschnittsfläche auf, welche einen grösseren Durchmesser aufweist, als eine Querschnittsfläche des Sechskantkopfs. Bevorzugt ist die dem Gewindeteil zugewandte Seite zudem als Kreisring ausgebildet. Damit kann eine Reibung beim Anziehen gering gehalten werden, insbesondere da durch die Interaktion mit dem Bauteil lediglich Gleitreibung auftreten kann. Dies ist dann von Vorteil, wenn die zu verbindenden Elemente aus geringfügig federndem oder deformierbarem Material gefertigt sind, da durch das Einpressen und Drehen eines nicht kreisförmigen (zum Beispiel eines eine sechskantige Kontaktfläche aufweisenden Schraubkopfs) Elements ein Drehwiderstand massiv erhöht und zudem das Bauteil sogar durch Spanabhebung beschädigt werden kann. Die Vergrösserte Querschnittsfläche hat weiter den Vorteil, dass der Kopfteil besser auf dem Bauteil abgestützt werden kann, womit auf die Bauteile eingreifende Kräfte besser aufgenommen werden können. Vorteilhaft ist weiter, dass damit ein Anschlag für den Drehmomentschlüssel erreicht werden kann. Insbesondere an schlecht zugänglichen Orten kann dies dem Anlagenbauer entgegenkommen. Die Querschnittsfläche muss nicht zwingend als Kreisring ausgebildet sein, sondern kann auch eine äussere Form eines Sechsecks oder weitere Formen aufweisen.

In Varianten kann auf die vergrösserte Querschnittsfläche auch verzichtet werden.

Vorzugsweise ist das zweite Element als Hülsenmutter ausgebildet, wobei die Hülse als glatter Kreiszylinder ausgebildet ist, welcher insbesondere zur Verstiftung geeignet ist, und ein Innengewinde aufweist. Das Innengewinde ist vorzugsweise koaxial zur Hülse ausgebildet. Der Kopfteil weist bevorzugt einen grösseren Durchmesser auf, als die Hülse, so dass dieser auch zum axialen Fixieren der Bauteile dienen kann. Der Kopfteil kann als Schraubenkopf oder als radial nach aussen kragender Rand der Hülse ausgebildet sein. Bevorzugt umfasst der zweite Kopfteil einen Innensechskantkopf und/oder eine polygonale Aussenkontur, insbesondere ein achteckige Aussenkontur. Damit kann mittels eines Inbusschlüssels oder eines Gabelschlüssels in einfacher Weise beim Festziehen der Schraubverbindung das zweite Element fixiert werden.

In Varianten kann der zweite Kopfteil auch jegliche andere Form aufweisen, so zum Beispiel ein Sechskant, Innensechskant oder weitere dem Fachmann bekannte Schraubenkopfformen. Weiter kann der zweite Kopfteil auch ohne Form für einen Drehmomentschlüssel ausgebildet sein, wobei dieser zum Beispiel eine quadratische, rechteckige oder eine beliebige polygonale Form, wie zum Beispiel eine Parallelogrammform aufweisen, welche in einer Nut gegen Verdrehung gesichert werden kann.

Der Innenraum des Innensechskantkopfs kommuniziert vorzugsweise mit dem Innenraum des Innengewindes.

Alternativ kann auf eine durchgängige Öffnung im zweiten Element auch verzichtet werden.

Bevorzugt sind das erste und/oder das zweite Element aus rostfreiem Stahl ausgebildet. Dies ist insbesondere dann von Vorteil, wenn eine besonders hohe Präzision gefordert und die Schraubverbindung hohen Belastungen ausgesetzt ist.

In Varianten können, insbesondere in Abhängigkeit des Einsatzgebiets, auch andere dem Fachmann bekannte Werkstoffe, wie zum Beispiel Aluminium oder Messing für das ersten und das zweite Element eingesetzt werden.

Vorzugsweise wird das zweite Element bei der Verwendung durch Öffnungen von mindestens zwei Lagen, insbesondere Lagen ausgebildet als Elemente für den Anlagenbau, eingeführt und das erste Element über das Aussengewinde in das Innengewinde des zweiten Elements eingeschraubt, wobei die Lagen relativ zueinander über den glatten Kreiszylinder radial gehalten sind und über den ersten und den zweiten Kopfteil axial gehalten sind. Dadurch, dass vorerst das erste Element durch Öffnungen der Lagen, respektive Bauteile, eingeführt wird, kann schon vor dem Verschrauben eine radiale Fixierung der Bauteile, respektive eine Verstiftung der Bauteile erreicht werden. Damit wird erreicht, dass die mehreren Bauteile bereits beim Einführen des ersten Elements in die Öffnungen im Wesentlichen die definitive radiale Orientierung aufweisen und sich beim Einschrauben des zweiten Elements radial nicht verschieben können.

In einer bevorzugten Ausführungsform weist der Durchmesser des glatten Kreiszylinders 6.5mm oder 10.5mm auf und weisen eine H-Toleranz von vorzugsweise 7 oder 8 auf. Der Abstand zwischen den Kopfteilen in der zweiten axialen Position kann zum Beispiel in der ersten, kürzeren Ausführungsform der Hülsenmutter 6 mm, respektive 10 mm und in der zweiten, längeren Ausführungsform der Hülsenmutter 12, respektive 20 mm betragen.

In Varianten sind auch andere Durchmesser des glatten Kreiszylinders, andere Toleranzen sowie andere Abstände zwischen den Kopfteilen denkbar.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:

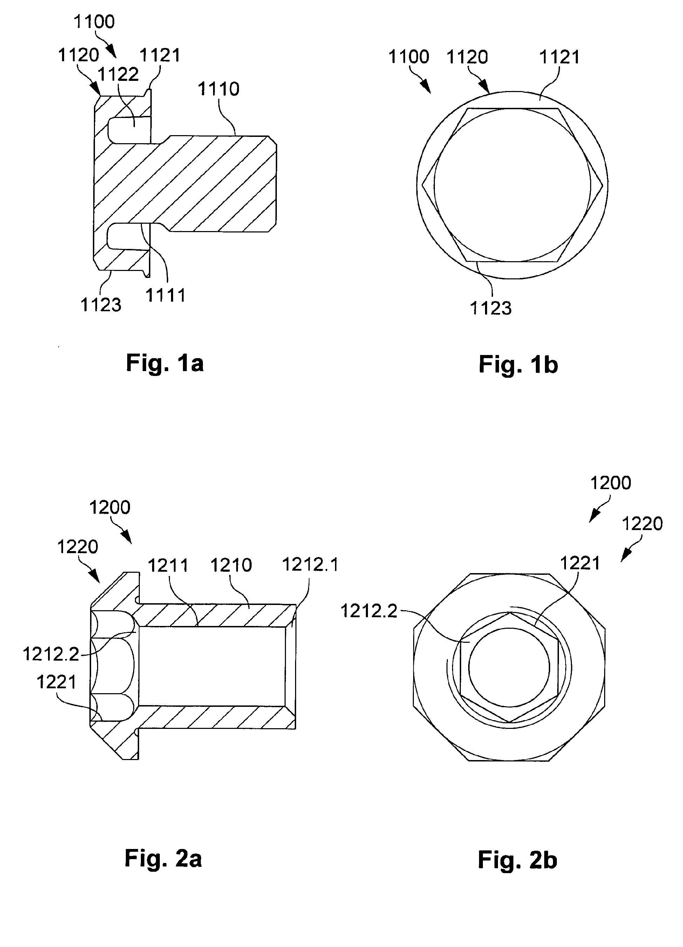

- Fig. 1a: eine Schnittdarstellung entlang einer Längsachse einer Hutschraube der ersten Ausführungsform;
- Fig. 1 b: eine schematische Draufsicht auf den Kopfteil der Hutschraube gemäss Figur 1a;
- Fig. 2a: eine Schnittdarstellung entlang einer Längsachse einer kurzen Hülsenmutter der ersten Ausführungsform;
- Fig. 2b: eine schematische Draufsicht auf den Hut der Hülsenmutter gemäss Figur 2a;
- Fig. 3a: eine Schnittdarstellung entlang einer Längsachse durch eine Schraubverbindung der ersten Ausführungsform mit einer kurzen Hülsenmutter in der zweiten axialen Position, wobei zwei Bauteile verschraubt sind;
- Fig. 3b: eine Schnittdarstellung entlang einer Längsachse durch eine Schraubverbindung der ersten Ausführungsform mit einer kurzen Hülsenmutter in der ersten axialen Position, wobei drei Bauteile verschraubt sind;
- Fig. 4a: eine Schnittdarstellung entlang einer Längsachse durch eine Schraubverbindung der ersten Ausführungsform mit einer langen Hülsenmutter in der zweiten axialen Position, wobei vier Bauteile verschraubt sind; und
- Fig. 4b: eine Schnittdarstellung entlang einer Längsachse durch eine Schraubverbindung der ersten Ausführungsform mit einer langen Hülsenmutter in der ersten axialen Position, wobei fünf Bauteile verschraubt sind.
- Fig. 5a: eine Schnittdarstellung entlang einer Längsachse einer Hutschraube der zweiten Ausführungsform;
- Fig. 5b: eine schematische Draufsicht auf den Kopfteil der Hutschraube gemäss Figur 5a;
- Fig. 6a: eine Schnittdarstellung entlang einer Längsachse einer kurzen Hülsenmutter der zweiten Ausführungsform;
- Fig. 6b: eine schematische Draufsicht auf den Hut der Hülsenmutter gemäss Figur 6a;
- Fig. 7a: eine Schnittdarstellung entlang einer Längsachse durch eine Schraubverbindung der zweiten Ausführungsform mit einer kurzen Hülsenmutter in der zweiten axialen Position, wobei zwei Bauteile verschraubt sind;
- Fig. 7b: eine Schnittdarstellung entlang einer Längsachse durch eine Schraubverbindung der zweiten Ausführungsform mit einer kurzen Hülsenmutter in der ersten axialen Position, wobei drei Bauteile verschraubt sind;
- Fig. 8a: eine Schnittdarstellung entlang einer Längsachse durch eine Schraubverbindung der zweiten Ausführungsform mit einer langen Hülsenmutter in der zweiten axialen Position, wobei vier Bauteile verschraubt sind; und
- Fig. 8b: eine Schnittdarstellung entlang einer Längsachse durch eine Schraubverbindung der zweiten Ausführungsform mit einer langen Hülsenmutter in der ersten axialen Position, wobei fünf Bauteile verschraubt sind.

Grundsätzlich sind in den Figuren gleiche Teile mit gleichen Bezugszeichen versehen.

### Wege zur Ausführung der Erfindung

In den nachfolgend beschriebenen Figuren sind die Hutschraube 1100 und die Hülsenmutter 1200 der ersten Ausführungsform jeweils ohne Gewinde abgebildet, um die wesentlichen Merkmale besser hervorheben zu können.

Figur 1 zeigt eine Schnittdarstellung entlang einer Längsachse einer Hutschraube 1100 der ersten Ausführungsform, umfassend einen Gewindeteil 1110 und einen Hut 1120. Der Gewindeteil 1110 weist im Wesentlichen die Form eines Kreiszylinders auf. Das Gewinde des Gewindeteils 1110 weist eine Gewindeachse in der Bildebene auf. Der Gewindeteil 1110 ist koaxial zum Hut 1120 orientiert. Das Gewinde des Gewindeteils 1110 ragt nicht bis zum Hut 1120, sondern geht zuvor in eine Verjüngung 1111 über. Der Unterschied des radial gemessenen Durchmessers zwischen dem Bereich des Gewindes und der Verjüngung 1111 entspricht ungefähr der Gewindetiefe. Der Hut 1120 weist im Wesentlichen die Form eines geraden, einseitig geschlossenen Zylinders mit sechseckiger Grundfläche auf, welcher als Aussensechskant als Kontaktbereich für einen Drehmomentschlüssel dient. Der Hut 1120 und der Gewindeteil sind nun so orientiert und verbunden, dass die Mittelsenkrechte des Sechsecks koaxial mit der Achse des Gewindeteils 1110 verläuft. Die Hutschraube 1100 umfasst eine im Wesentlichen U-förmige Nut 1122, wobei die Öffnung der U-Form axial ausgerichtet ist. Ein dem Hut 1120 zugewandter Bereich der Verjüngung 1111 bildet dabei eine innere Flanke der U-Form, die äussere Flanke wird durch die Innenwand des Huts 1120 gebildet. Der Hut 1120 weist in der dem Gewindeteil 1110 zugewandten Seite einen radial nach aussen stehenden Flansch 1121 auf.

Figur 1b zeigt eine schematische Draufsicht auf den Hut 1120 der Hutschraube 1100 gemäss Figur 1 a. Dabei sind der Aussensechskant 1123, sowie der Flansch 1121 ersichtlich. In der vorliegenden ersten Ausführungsform weist der Aussensechskant 1123 im Randbereich axial gegenüber dem Flansch 1121 Arrondierungen auf, welche ein Aufsetzen eines Drehmomentschlüssels vereinfachen kann.

Figur 2a zeigt eine Schnittdarstellung entlang einer Längsachse einer Hülsenmutter 1200 der ersten Ausführungsform, der axial kürzeren Form. Die Hülsenmutter 1200 umfasst eine Hülse 1210 mit einem Innengewinde 1211 und einen koaxial mit der Hülse 1210 verbundenen Schulter 1220. Die Hülse weist beidseitig im Randbereich Abschrägungen 1212.1, 1212.2 der inneren Kanten auf, welche zum Einen den Übergang zum Innengewinde symbolisieren und zum Anderen, insbesondere bei der der Schulter 1220 gegenüberliegenden Kante, das Einführen der Hutschraube 1100 vereinfachen soll. Die Schulter 1220 weist einen Innensechskant 1221 auf, welcher über die Abschrägung 1212.2 in den Innenraum der Hülse 1210 übergeht. Mit der Abschrägung 1212.2 wird nun erreicht, dass ein Sechskantschlüssel (Inbusschlüssel) nicht in den Gewindebereich gelangen kann, wodurch das Gewinde verletzt werden könnte.

Figur 2b zeigt eine schematische Draufsicht auf die Schulter 1220 der Hülsenmutter 1200 gemäss Figur 2a. Der Kopfteil weist im Wesentlichen eine achteckige Form auf, welche auf der der Hülse 1210 gegenüberliegende Seite die Form eines Kreiskegelstumpfes aufweist. Über die achteckige Form kann die Hülsenmutter 1200 während des Verschraubens verdrehgesichert werden. Innerhalb des und koaxial zum Kreiskegelstumpf ist der Innensechskant 1221 ausgebildet, welcher über die Abschrägung 1212.2 in das Innengewinde 1211 übergeht.

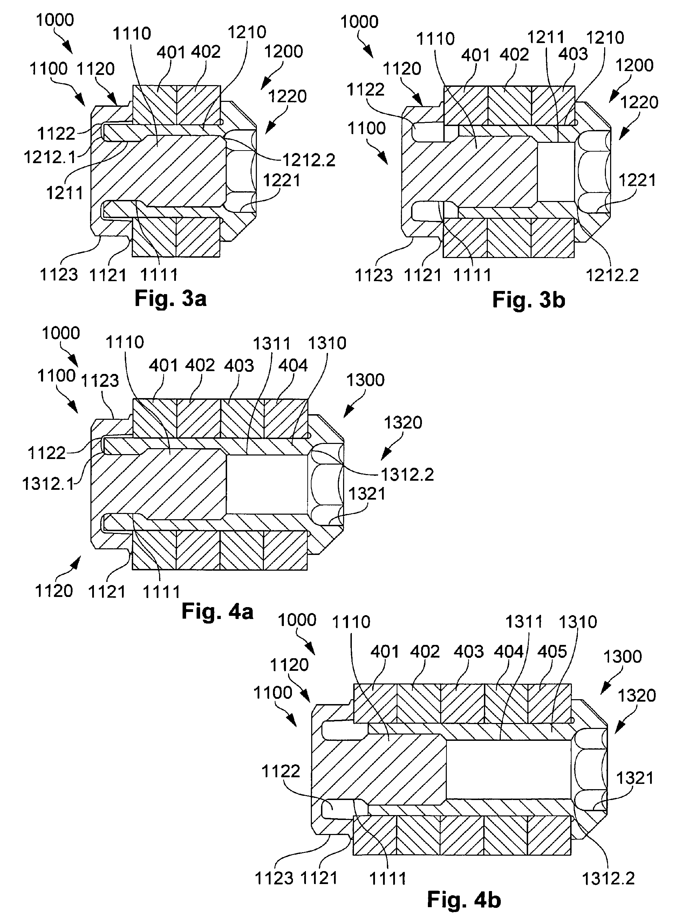

Figur 3a zeigt eine Schnittdarstellung entlang einer Längsachse durch eine Schraubverbindung 1000 der ersten Ausführungsform mit einer kurzen Hülsenmutter 1200, in der zweiten axialen Position, wobei zwei Bauteile 401, 402 verschraubt sind. Die Bauteile 401 weisen kreiszylindrische Öffnungen auf. Die Hülsenmutter 1200 wird durch die Öffnungen hindurch geführt. Anschliessend wird die Hutschraube 1100 mit dem Gewindeteil 1110 in das Innengewinde 1211 der Hülse 1210 der Hülsenmutter 1200 eingeschraubt. Dazu wird ein Sechskantschlüssel, zum Beispiel ein Drehmomentregulierter Schlüssel, zum Einschrauben der Hutschraube 1100 und ein Inbusschlüssel zum Entgegenhalten bei der Hülsenmutter 1200 verwendet. Während des Einschraubens bewegt sich die Hülse 1210 mit dem der Schulter 1220 gegenüberliegenden Bereich in die Nut 1122 des Huts 1120 der Hutschraube 1100 hinein. Die Schraubverbindung 1000 ist dabei so gewählt, dass in verschraubtem und angezogenem Zustand der vorderste Bereich der Hülse 1210 die Nut 1120 knapp nicht berührt, so dass der axiale Druck im Wesentlichen über den Hut 1120 und der Schulter 1220 auf die Bauteile 401, 402 wirkt.

Figur 3b zeigt eine Schnittdarstellung entlang einer Längsachse durch eine Schraubverbindung 1000, im Wesentlichen gemäss der Figur 3a, wobei die Hülsenmutter 1200 in der ersten axialen Position ist und wobei drei Bauteile 401 - 403 verschraubt sind. Im Unterschied zur Figur 3a ragt die Hülse 1210 nicht bis in die Nut 1122 der Hutschraube 1100 hinein, sondern ragt nur bis zum Ende des Gewindes der Hutschraube 1100. Das Gewinde der Hutschraube ist also wie bei der zweiten axialen Position vollständig in Kontakt mit dem Innengewinde 1211 der Hülsenmutter 1200.

Die Figuren 4a und 4b zeigen eine Schnittdarstellung entlang einer Längsachse durch eine Schraubverbindung der ersten Ausführungsform mit einer langen Hülsenmutter 1300 in der zweiten axialen Position, wobei vier Bauteile 401 - 404, respektive fünf Bauteile 401 - 405 verschraubt sind. Das Prinzip ist grundsätzlich identisch mit demjenigen des in den Figuren 3a und 3b gezeigten. Der Unterschied zu den Figuren 3a und 3b liegt darin, dass die lange Hülsenmutter 1300 um eine doppelte Dicke eines vorliegenden Bauteils 401 länger ausgebildet ist, so dass statt zwei oder drei Bauteile 401, 402 nun vier oder fünf Bauteile 401 - 405 verschraubt werden können. Der Kopfteil der langen Hülsenmutter 1300 ist identisch mit dem Kopfteil der kurzen Hülsenmutter 1200. In den Figuren sind entsprechend statt der tausendzweihunderter-Nummern tausenddreihunderter-Nummern angegeben.

In den nachfolgenden Figuren sind die Hutschraube 2100 und die Hülsenmutter 2200 der zweiten Ausführungsform im Hinblick auf die Unterschiede zu der Hutschraube 1100 und der Hülsenmutter 1200 der ersten Ausführungsform beschrieben. Wiederum sind die Gewinde nicht abgebildet, um die wesentlichen Merkmale besser hervorheben zu können.

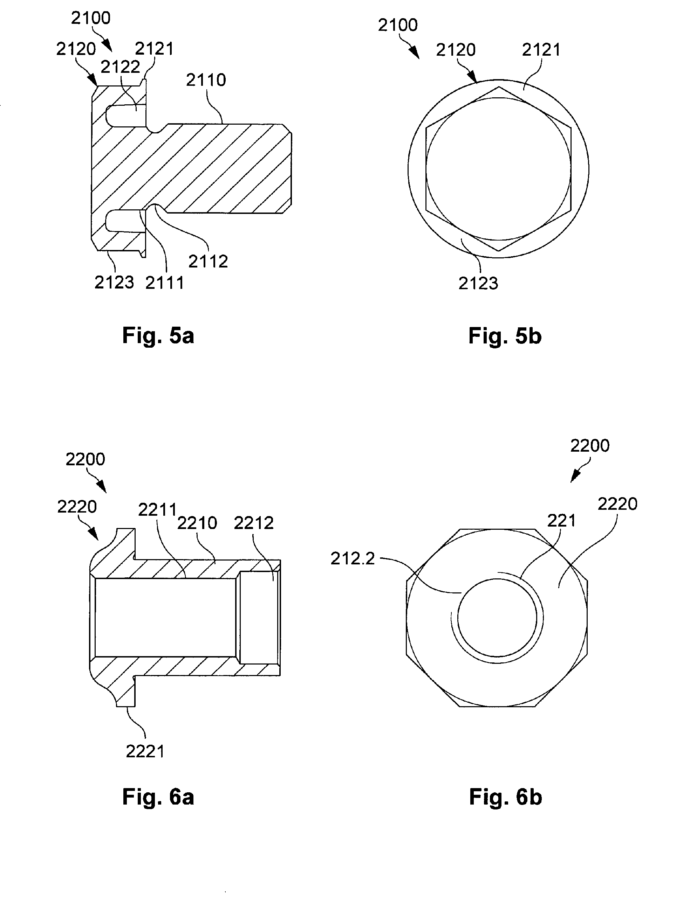

Die Figur 5a zeigt eine Schnittdarstellung entlang einer Längsachse einer Hutschraube 2100 der zweiten Ausführungsform. Diese unterschiedet sich von der Hutschraube 1100 der ersten Ausführungsform im Wesentlichen dadurch, dass die Verjüngung 2111 in etwa einen Durchmesser aufweist, welcher dem Durchmesser des Gewindeteils 2110 entspricht. Zwischen der Verjüngung 2111 und dem Gewindeteil 2110 ist eine umlaufende Kerbe 2112 vorgesehen, welche einen geringeren Durchmesser als die Verjüngung 2111 aufweist.

Die Figur. 5b zeigt eine schematische Draufsicht auf den Kopfteil 2120 der Hutschraube gemäss Figur 5a, welche sich nicht von der Draufsicht gemäss Figur 1b unterscheidet.

Die Figur 6a zeigt eine Schnittdarstellung entlang einer Längsachse einer kurzen Hülsenmutter 2200 der zweiten Ausführungsform. Diese unterscheidet sich von der Hülsenmutter 1200 der ersten Ausführungsform dadurch, dass kein Innensechskant vorliegt, sonder das Innengewinde 2211 durch den Kopfteil hindurch geführt ist. An dem dem Kopfteil gegenüberliegenden Ende ist innwändig ein Freistich 2212 vorgesehen. Im Bereich des Freistiches 2212 weist die Hülsenmutter 220 einen grösseren Innendurchmesser als im Bereich des Innengewindes 2211 auf.

Die Figur 6b zeigt eine schematische Draufsicht auf den Kopf der Hülsenmutter 2200 gemäss Figur 6a, wobei im Unterschied zur Hülsenmutter 1200 lediglich der Innensechskant weggelassen ist. Die vorliegende Hülsenmutter 2200 wird daher zum Beispiel mittels eines Schraubenschlüssels über die achteckige Aussenkontur 2321 während dem Verschrauben fixiert.

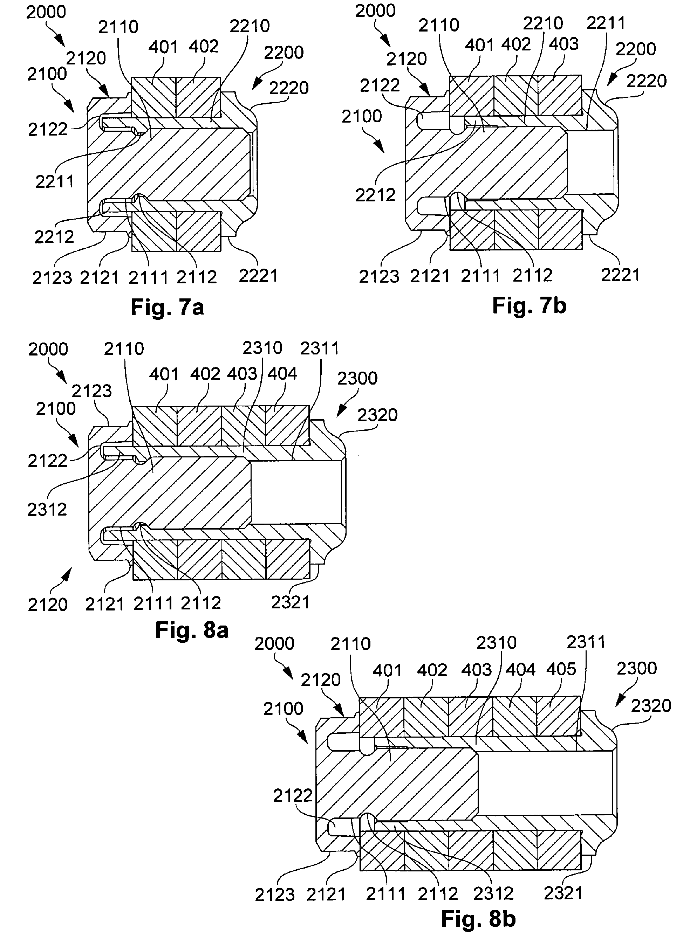

Die Figuren 7a, 7b, 8a und 8b zeigen jeweils eine Schnittdarstellung entlang einer Längsachse durch eine Schraubverbindung 2000 der zweiten Ausführungsform entsprechend den Figuren 3a, 3b, 4a, 4b, wobei im Unterschied die Hülsenmuttern 2200, respektive 2300 und die Hutschraube 2100 gemäss der zweiten Ausführungsform eingesetzt sind.

Zusammenfassend ist festzustellen, dass durch Erfindungsgemäss eine besonders einfache Schraubverbindung geschaffen wird, welche gleichzeitig zur Verstiftung dient und variabel einsetzbar ist.

## Patentansprüche

1. Schraubverbindung (1000), insbesondere für den Maschinen-, Sondermaschinen- und Anlagenbau , mit einem ersten Element (1100), umfassend ein Aussengewinde (1110) und einen ersten Kopfteil (1120), sowie einem zweiten Element (1200; 1300), umfassend ein Innengewinde (1211; 1311) und einen zweiten Kopfteil (1220; 1320), **dadurch gekennzeichnet, dass** bei in das zweite Element (1200; 1300) vollständig eingeschraubtem ersten Element (1100) eine Oberfläche zwischen dem ersten Kopfteil (1120) und dem zweiten Kopfteil (1220; 1320) als glatter Kreiszylinder (1210; 1310) ausgebildet ist, welcher insbesondere zur Verstiftung geeignet ist.

2. Schraubverbindung (1000) nach Anspruch 1, **dadurch gekennzeichnet, dass** das erste Element (1100) mit dem zweiten Element (1200; 1300) in axial mindestens zwei Positionen verschraubbar ist, wobei der Abstand zwischen dem ersten (1120) und dem zweiten Kopfteil (1220; 1320) in der ersten axialen Position grösser ist als in der zweiten axialen Position.

3. Schraubverbindung (1000) nach Anspruch 2, **dadurch gekennzeichnet, dass** der Abstand in der ersten axialen Position um mindestens 25 %, insbesondere um mindestens 33 % grösser ist als in der zweiten axialen Position.

4. Schraubverbindung (1000) nach einem der Ansprüche 1 bis 3, **dadurch gekennzeichnet, dass** das erste Element als Hutschraube (1100) ausgebildet ist.

5. Schraubverbindung (1000) nach Anspruch 4, **dadurch gekennzeichnet, dass** der Aussengewindeteil (1110) eine zum ersten Kopfteil (1120) benachbarte umlaufende Nut (1122) umfasst.

6. Schraubverbindung (1000) nach Anspruch 5, **dadurch gekennzeichnet, dass** die Nut (1122) eine axiale Tiefe bezüglich dem Abstand zwischen dem ersten (1120) und dem zweiten Kopfteil (1220; 1320), in vollständig eingeschraubtem Zustand, im Bereich von unter 50% des Abstandes, aufweist.

7. Schraubverbindung (1000) nach Anspruch 5 oder 6, **dadurch gekennzeichnet, dass** der Aussengewindeteil (1110) des ersten Elements (1100) im Bereich der Nut (1122) eine Verjüngung (1111) umfasst.

8. Schraubverbindung (1000) nach einem der Ansprüche 1 bis 7, **dadurch gekennzeichnet, dass** der Kopfteil (1120) des ersten Elements (1100) einen Sechskantkopf (1123) umfasst.

9. Schraubverbindung (1000) nach einem der Ansprüche 1 bis 8, **dadurch gekennzeichnet, dass** der Kopfteil (1120) des ersten Elements (1100) in einer dem Gewindeteil (1110) zugewandten Seite eine Querschnittsfläche aufweist, welche einen grösseren Durchmesser aufweist, als eine Querschnittsfläche des Sechskantkopfs (1123).

10. Schraubverbindung (1000) nach einem der Ansprüche 1 bis 9, **dadurch gekennzeichnet, dass** das zweite Element als Hülsenmutter (1200; 1300) ausgebildet ist, wobei die Hülse als glatter Kreiszylinder (1210; 1310) ausgebildet ist, welcher insbesondere zur Verstiftung geeignet ist, und ein Innengewinde (1211; 1311) aufweist.

11. Schraubverbindung (1000) nach einem der Ansprüche 1 bis 10, **dadurch gekennzeichnet, dass** der zweite Kopfteil (1220; 1320) einen Innensechskantkopf (1221; 1321) und/oder einen polygonale Aussenkontur, insbesondere ein achteckige Aussenkontur umfasst.

12. Schraubverbindung (1000) nach Anspruch 11, **dadurch gekennzeichnet, dass** der Innenraum des Innensechskantkopfs (1221; 1321) mit dem Innenraum des Innengewindes (1211; 1311) kommuniziert.

13. Schraubverbindung (1000) nach einem der Ansprüche 1 bis 12, **dadurch gekennzeichnet, dass** das erste (1100) und/oder das zweite Element (1200; 1300) aus rostfreiem Stahl ausgebildet sind.

14. Verwendung einer Schraubverbindung (1000) gemäss einem der Ansprüche 1 bis 13, wobei das zweite Element (1200; 1300) durch Öffnungen von mindestens zwei Lagen (401 - 405), insbesondere Lagen ausgebildet als Elemente für den Anlagenbau, eingeführt wird und das erste Element (1100) über das Aussengewinde (1110) in das Innengewinde (1211; 1311) des zweiten Elements (1200; 1300) eingeschraubt wird, wobei die Lagen (1401 - 1405) relativ zueinander über den glatten Kreiszylinder (1210; 1310) radial gehalten sind und über den ersten (1120) und den zweiten Kopfteil (1220; 1320) axial gehalten sind.

15. Verwendung nach Anspruch 14, **dadurch gekennzeichnet, dass** in einer ersten axialen Verschraubungsposition drei, respektive fünf Lagen (401 - 405) zwischen dem ersten (1120) und dem zweiten Kopfteil (1220; 1320) aufgenommen sind und in einer zweiten axialen Verschraubungsposition zwei, respektive vier Lagen (1401 - 1405) zwischen dem ersten (1120) und dem zweiten Kopfteil (1220; 1320) aufgenommen sind, wobei jeweils alle Lagen (1401 - 1405) radial über den glatten Kreiszylinder (1210; 1310) gehalten sind.
